Europäisches Patentamt

European Patent Office

Office européen des brevets

(19)

(11) Veröffentlichungsnummer: **0 191 314 B1**

## EUROPÄISCHE PATENTSCHRIFT

(12)

(45) Veröffentlichungstag der Patentschrift: **24.04.91**

(51) Int. Cl.⁵: **B23H  11/00,** B23H 7/02

(21) Anmeldenummer: **86100549.4**

(22) Anmeldetag: **17.01.86**

(54) **Einrichtung zur Bearbeitung von Werkstücken.**

(30) Priorität: **22.01.85 CH 279/85**

(43) Veröffentlichungstag der Anmeldung:
**20.08.86 Patentblatt  86/34**

(45) Bekanntmachung des Hinweises auf die
Patenterteilung:
**24.04.91 Patentblatt  91/17**

(84) Benannte Vertragsstaaten:
**CH DE FR GB IT LI SE**

(56) Entgegenhaltungen:
**DD-A- 146 409**
**DE-A- 2 303 842**

(73) Patentinhaber: **Büchler B-SET AG**
**Wiler Strasse 98**
**CH-9230 Flawil(CH)**

(72) Erfinder: **Buechler, René**
**Weidweg 2**
**CH-9245 Sonnental SG(CH)**

(74) Vertreter: **EGLI-EUROPEAN PATENT ATTOR-**
**NEYS**
**Horneggstrasse 4**
**CH-8008 Zürich(CH)**

Rank Xerox (UK) Business Services

## Beschreibung

Die vorliegende Erfindung betrifft eine Einrichtung zur Halterung eines durch funkenerosives Schneiden mit einer Drahtelektrode in ein Ausfallstück und ein Restwerkstück zu trennenden Werkstücks, gemäss dem Patentanspruch 1.

Eine Einrichtung dieser Art ist aus DD-A-82820 bekannt. Sie betrifft ein Einrichtung zur Halterung eines durch Schneiden in ein Ausfallstück und ein Restwerkstück zu trennenden Werkstücks, mit einem Haltemittel zumindest für das Ausfallstück, wobei das Haltemittel ganz oder teilweise als Brükke ausgebildet ist, welche die zwischen dem Ausfallstück und dem Restwerkstück entstehende Schnittstelle überbrückt und Endpartien umfasst, von denen die eine zur Befestigung am entstehenden Ausfallstück und die andere zur Befestigung am entstehenden Restwerkstück bestimmt ist.

Diese Einrichtung nach DD-A-82820 löst das Problem der Halterung des vom übrigen Teil des Werkstückes abzutrennenden Teiles, um zu vermeiden, dass der abzutrennende und normalerweise nicht aufgespannte Teil des Werkstückes sich während des Trennvorganges bewegt und dabei gegebenenfalls auf das Werkzeug einwirkt, mit der Folge, dass das Produkt nicht genau jene Form bzw. Abmessungen aufweist, die erreicht werden sollen.

Eine Einrichtung nach DE-A-2303842 ist zur Bearbeitung von Werkstücken durch Drahterosion vorgesehen und umfasst eine Einrichtung zur Halterung eines durch funkenerosives Schneiden mit einer Drahtelektrode in ein Ausfallstück und ein Restwerkstück zu trennenden Werkstücks, mit zwei Haltemitteln, die jeweils in gegenüberliegenden Kantenbereichen des Werkstücks gegen das Werkstück gedrückt werden. Diese Haltemittel sind auf die zwei gegenüberliegenden Kantenbereichen des Werkstücks unabhängig voneinander positionierbar.

Bei der Bearbeitung von Werkstücken durch Drahterosion ist jedoch das Problem der Halterung des vom übrigen Teil des Werkstückes abgetrennten Teils durch die aus DD-A-82820 und DE-A-2303842 bekannten Lösungen noch nicht zufriedenstellend gelöst, weil der freie Zugang zur Schnittstelle nicht gewährleistetist. Insbesondere stehen bei der Lösung nach DD-A-82820 die Aufnahmeplatte und der Querbalken der Drahtelektrode im Wege.

Aufgabe der vorliegenden Erfindung ist es, eine Einrichtung der eingangs genannten Art anzugeben, welche den freien Zugang zur Schnittstelle stets gewährleistet.

Diese Aufgabe wird bei einer Einrichtung der eingangs genannten Art erfindungsgemäss so gelöst, wie es eingangs und im Patentanspruch 1 definiert ist.

In der erfindungsgemässe Einrichtung können vorzugsweise die Endpartien mittels einer Andrückvorrichtung gegen das Werkstück andrückbar sein, und dann kann ein Haltemittel vorzugsweise in zwei Hälften unterteilt sein, die dazu bestimmt sind, das Werkstück an seinen gegenüberliegenden Kantenbereichen in Klemme zu nehmen.

Nachstehend werden Ausfuhrungsbeispiele der vorliegenden Erfindung anhand der beiliegenden Zeichnungen näner erläutert. Es zeigt:

Fig. 1 in Draufsicht eine Ausfuhrungsform des vorliegenden Haltemittels,

Fig. 2 in Draufsicht ein Werkstück, an dem zwei Haltemittel gemäss Fig. 1 angebracht sind,

Fig. 3 in Frontansicht das Werkstück aus Fig. 2,

Fig. 4 in Draufsicht eine Klemmvorrichtung, mit deren Hilfe die Haltemittel nach Fig. 1 gegen ein Werkstück angedrückt werden,

Fig. 5 in Draufsicht eine Klemmvorrichtung wie in Fig. 4, deren Schenkel mit Längsschlitzen zum Verschieben der Haltemittel versehen sind.

Fig. 6 in Draufsicht die Klemmvorrichtung nach Fig. 4, die mit einem Schaft versehen ist,

Fig. 7 in rückwärtiger Ansicht die Vorrichtung nach Fig. 6.

Die vorliegende Einrichtung zur Bearbeitung von Werkstücken weist wenigstens ein Haltemittel auf, das die voneinander zu trennenden oder bereits getrennten Teile eines Werkstückes in einer unveränderter Lage zueinander zusammenhalt, bis der jeweilige Schnittvorgang beendet ist. Dieses Haltemittel kann auf wenigstens einem der Teile des Werkstückes befestigt sein. Im Nachstenenden wird als Ausfallstück jener Teil eines Werkstückes bezeichnet, der vom übrigen Teil des Werkstückes. d.h. vom Restwerkstück, abgetrennt werden soll.

Das Haltemittel ist an einem Werkstück so angebracht, dass es die Projektion des Schnittes durch das Werkstück in die Grundebene der Einrichtung nicht überdeckt. Dies bedeutet, dass das Haltemittel ausserhalb des Schnittes liegt. Im Nachstehenden wird ein solches Haltemittel beschrieben.

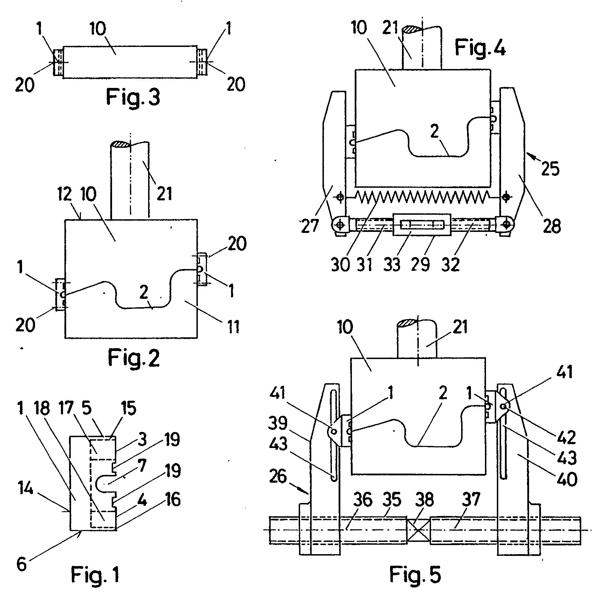

In Fig. 1 ist eine Ausführungsform des Haltemittels 1 der vorliegenden Einrichtung in Draufsicht dargestellt. Dieses Haltemittel 1 hat im wesentlichen die Form einer Brücke. wobei die Grundfläche 3 bzw. 4 der Endpartien 5 bzw. 6 dieser Brücke 1 zur Auflage auf das Werkstück 10 (Fig. 2) bestimmt ist. Die eine Endpartie 6 dieser Brücke 1 kann mit ihrer Grundfläche 4 am Ausfallstück 11 befestigt sein, während die Grundfläche 3 der anderen Endpartie 5 der Brücke 1 am Restwerkstuck 12 aufliegen kann. Zwischen den Endpartien 5 und 6 ist eine Ausnehmung 7 im Haltemittel 1 vorhanden, die sich nach aussen hin öffnet. Die Brücken 1 (Fig. 2) sind an den Seitenflächen des Werkstükkes 10 angebracht und deswegen gehören sie zu jener Gruppe von Haltemitteln. die die Projektion des Schnittes 2 in die Grundebene der Einrichtung nicht überdecken.

Die genannte Brücke 1 kann aus verschiedenen Materialien sein. Auf der ersten Stelle kommen Metalle, wie Stahl. Messing oder dgl. in Frage. Ferner kann eine solche Brücke auch aus Kunststoff sein. Eine Brücke kann jedoch auch aus verschiedenen Materialien sein, wie z.B. aus Metall und Kunststoff.

Die Brücken 1 müssen am Werkstück 10 befestigt sein, damit sie die Teile 11 und 12 des Werkstückes 10 in unveränderter Lage zueinander bis zur Beendigung des Schnittvorganges halten können. Diese Befestigung kann unter der Ausnützung magnetischer Kraft. von Unterdruck. durch Löten, Kleben, Hartlöten, Schweissen. Verschrauben, Nieten, Klemmen oder unter Verwendung von Doppelklebeband erfolgen.

Das in Fig. 1 dargestellte Haltemittel 1 ist so ausgeführt. dass es am Werkstück 10 unter der Ausnützung von magnetischer Kraft oder durch Kleben, Löten usw. befestigt werden kann. Das Haltemittel 1 weist einen Grundkörper 14 auf. der etwa quaderförmig ist und von dem Schenkel 15 und 16 abstehen. Die Schenkel 15 und 16 sind verhältnismässig dünn, sie stehen vom Grundkörper 14 in derselben Richtung ab und sie stellen einen Bestandteil der jeweiligen Endpartie 5 bzw. 6 der Brücke 1 dar. Der Innenseite des jeweiligen Schenkels 15 bzw. 16 ist je ein Magnet 17 bzw. 18 zugeordnet. Mindestens einer der Pole N bzw. S dieser Magnete 17 und 18 muss sich im Bereich der Grundfläche 3 bzw. 4 befinden.

Wenn die Brücke 1 Magnete 17 und 18 enthält, dann ist der Grundkörper 14 vorteilhaft aus einem Metall, so dass er das Joch für die Magnete 17 und 18 bilden kann. Der magnetische Fluss schliesst sich dann durch das Werkstück 10.

Die Ausnehmung 7 im Haltemittel i dient auch als eine Oeffnung. durch welche die Drahtelektrode beim Elektroerodieren durchgefädelt wird, bevor der eigentliche Schneidvorgang beginnt.

Für den Fall, dass das Haltemittel 1 durch kleben, Löten usw. am Werkstück 10 angebracht werden soll, weisen die Grundflächen 3 und 4 der Brücke 1 Vertiefungen 19 auf, in welchen das allfällig überschüssige Bindemittel, das sich zwischen der Oberfläche des Werkstückes 1 und den Grundflächen 3 und 4 befindet, Platz finden kann.

In Fig. 2 ist es angedeutet, dass die Brücken 1 am Werkstück 10 auch mit Hilfe von Schrauben 20 befestigt sein können. Jede Endpartie 5 bzw. 6 der Brücke 1 ist mit einer durchgenenden Bohrung versehen, durch welche je eine Schraube 20 hindurchgeht. Diese Schrauben 20 sind im Werstück eingeschraubt. Da die jeweilige Endpartie 5 bzw. 6 zu einer Seite des Schnittes 2 liegt. sind die Schrauben 20 zu den beiden Seiten des Schnittes 2 im Werkstück 10 eingeschraubt. Aus Fig. 2 ist ferner ersichtlich,dass am Werkstück 10 ein Schaft 21 angebracht ist, der zum Anschluss des Werkstückes 10 an Hilfsvorrichtungen (nicht dargestellt) bestimmt ist. die es ermöglichen, das Werkstück in einer zur Bearbeitung dieses geeigneten Lage zu halten.

Fig. 4 und 5 zeigen zwei weitere Ausführungsformen der vorliegenden Einrichtung, bei den die Haltemittel 1 mit Hilfe einer Klemmvorrichtung 25 bzw. 26 gegen die Seitenflächen des Werkstückes 10 angedrückt werden. Die Klemmvorrichtung 25 gemäss Fig. 4 weist zwei Schenkel 27 und 28 auf, die an den Enden eines Steges 29 mit verstellbarer Länge einerends anscharniert sind. Parallel zum Steg 29 erstreckt sich eine Zugfeder 30 zwischen den Schenkeln 27 und 28. Die Innenseite der Schenkel 27 und 28 liegt auf den Haltemitteln 1 auf und drückt diese gegen das Werkstück 10 an. Der Steg 29 weist zwei Schrauben 31 und 32 mit rechts- bzw. linksgängigem Gewinde auf. deren Köpfe gegabelt sind. so dass am jeweiligen Kopf einer der Schenkel 27 bzw. 28 anscharniert sein kann. Die Bolzen der Schrauben 31 und 32 sind mit Hilfe eines Stellgliedes 33 miteinander verbunden. Dieses Stellglied 33 ist als eine Doppelmutter bzw. ein Spannschloss ausgeführt.

Bei der Klemmvorrichtung 26 nach Fig. 5 besteht der Steg 35 aus zwei koaxial angeordneten Schrauben 36 und 37, die mittels eines Profilstükkes 38 miteinander verbunden sind. Auf der jeweiligen Schraube 36 bzw. 37 sitzt ein Schenkel 39 bzw. 40 der Klemmvorrichtung 26, die die Haltemittel 1 gegen das Werkstück 10 andrücken. Im dargestelleten Beispiel ist die rückwärtige Seite des jeweiligen Haltemittels 1 mit gabelförmigen Vorsprüngen 41 versehen, in welchen Oeffnungen ausgeführt sind. Durch diese Oeffnungen gehen Stifte 42 hindurch, die sich durch einen Schlitz 43 erstrecken, der im jeweiligen Schenkel 39 bzw. 40 ausgeführt ist und der sich in der Längsrichtung des jeweiligen Schenkels erstreckt. Wenn man mit einem geeigneten Instrument am Profilstück 38 angreift, kann man den Abstand zwischen den Schenkeln 39 und 40 verändern. Wegen den Stiften 42 können die Haltemittel 1 von den Schenkel 39 bzw. 40 nicht wegfallen und so lassen sich die Haltemittel am jeweilige Werkstück 10 schnell und präzise anbringen.

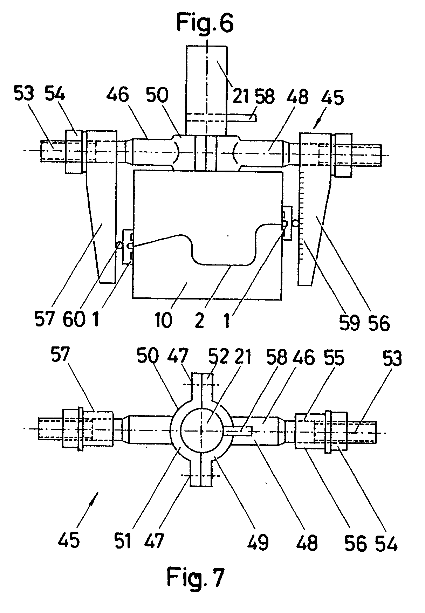

Fig. 6 und 7 zeigen eine weitere Ausführungsform der Klemmvorrichtung 45. Der Steg 46 besteht aus zwei im wesentlichen gleich ausgebildeten Hälften, die mit Hilfe von Schrauben 47 miteinander verbunden sind. Die jeweilige Steghälfte enthält einen Grundteil 48, an den sich eine Hälfte 49 bzw. 51 einer Dese 50 anschliesst. Diese Oesehalften 49 und 51 sind mit Hilfe der Schrauben 47

EP 0 191 314 B1

miteinander verbunden, weiche durch Fanscne 52 an den Oesenhälften 49 und 51 hindurchgenen. Der Durchmesser der Oese 50 ist so gewählt, dass beim Anziehen der Schrauben 4/ die Oese 50 auf dem Schaft 21 festsitzt, der einen Anschlagstift58 trägt. Die dem Werkstück 10 zugewandte Oberfläche der Oese 50 kann als Anschlag für das Werkstück 10 dienen.

Die andere Endpartie des Grundteiles 48 der Stegnälfte läuft in einen Schraubenabschnitt 53 aus und auf diesem Abschnitt 53 befindet sich eine Mutter 54. Zwischen dem Grundteil 48 und der Mutter 54 befindet sich das Auge 55 von Schenkeln 56 bzw 57. Die Innenflächen der Schenkel 56 und 57 laufen parallel zueinander und diesen Flächen ist je eine Skala 59 am jeweiligen Schenkel 56 bzw. 57 zugeordnet. Zwischen dem jeweiligen Schenkel 56 bzw. 57 und dem Haltemittel 1 besteht eine Verbindung 60. die eine Schwenkbewegung des Haltemittels 1 in bezug auf den diesem zugeordneten Schenkel 56 bzw. 57 zulässt. Diese Verbindung 60 befindet sich etwa in der Mitte der Länge der Brücke 1. Die genannten Verbindung 60 stellt sicher. das die Brücke 1 über ihre ganze Länge mit derselben Kraft gegen das Werkstück 10 angedrückt wird.

Damit die Klammerhälften 66 und 67 etwa parallel zueinander liegen, enthält die gegenüberliegende Endpartie der Klammerhälften eine Distanzschraube 71. Diese ist in der oberen Klammerhälfte 66 eingeschraubt und sie drückt auf die untere Klammerhälfte 67. Die die Klauen 69 und 70 aufweisenden Endpartien der Klammerhälften 66 und 67 sind gegabelt, so dass jede der Hälften 66 und 67 Gabelenden /2 und 73 aufweist. Die Klammer 65 wird am Werkstück 10 so angebracht, dass sich die Schnittstelle 2 zwischen den Gabelenden 72 und 73 befindet.

Eine noch weitere Ausführungsform des den Schnitt nicht überdeckenden Haltemittels ist in Fig. 13 dargestellt. Dieses Haltemittel 75 ist etwa stempelförmig ausgebildet. Der untere. flache Teil 76 dieses Anschlusstückes 75 ist beispielsweise am Ausfallstück 11 in an sich bekannter Weise ebenfall vorübergehend befestigt. Der obere und etwa kugelförmige leil /7 dieses Haltemittels 75 ist mit einer Entnahmevorrichtung 78 formschlüssig verbunden. mit dessen Hilfe das Ausfallstück 11 aus der Einrichtung entfernt werden kann. Danach wird das Anschlusstück 75 von Ausfallstück 11 gelöst.

In Fig. 10 ist ein Werkstück 10 dargestellt, in dem ein in sich geschlossener Schnitt 2 ausgeführt ist. Ein solcher Schnitt kann mit Hilfe einer Drahtelektrode (nicht dargestellt) hergestellt werden, wenn Elektroerosion zur Bearbeitung des Werk-

## Ansprüche

1. Einrichtung zur Halterung eines durch funkenerosives Schneiden mit einer Drahtelektrode in ein Ausfallstück (11) und ein Restwerkstück (12) zu trennenden Werkstücks (10), mit mindestens zwei Haltemitteln (1;65), die jeweils in gegenüberliegenden Kantenbereichen des Werkstücks gegen das Werkstück gedrückt werden, wobei die Haltemittel als Brücken ausgebildet sind, welche die zwischen dem Ausfallstück (11) und dem Restwerkstück (12) entstehende Schnittstelle (2) überbrücken und Endpartien (5,6;69,70,72,73) umfassen, von denen die eine (6) zur Befestigung am entstehenden Ausfallstück (11) und die andere (5) zur Befestigung am entstehenden Restwerkstück (12) bestimmt ist, und wobei die Haltemittel auf die zwei gegenüberliegenden Kantenbereichen des Werkstücks (10) unabhängig voneinander positionierbar sind, um verschiedene Schnittführungen zu ermöglichen, und wobei die Haltemittel auf ihrer gegen das Werkstück (10) angedrückten Seite zwischen den Endpartien (5,6;69,70,72,73) eine Ausnehmung (7) aufweisen, um zwischen dem Werkstück (10) und dem jeweiligen Haltemittel (1;65) die Aussparung eines Zwischenraums für die Drahtelektrode zu ermöglichen.

2. Einrichtung nach Anspruch 1, dadurch gekennzeichnet, dass die Endpartien (5,6;69,70,72,73) mittels einer Andrückvorrichtung (25;26;45;68,71) gegen das Werkstück (10) andrückbar sind.

3. Einrichtung nach Anspruch 2, dadurch gekennzeichnet, dass ein Haltemittel (65) in zwei Hälften (66,67) unterteilt ist, die dazu bestimmt sind, das Werkstück (10) an seinen gegenüberliegenden Kantenbereichen in Klemme zu nehmen.

## Claims

1. Apparatus for holding a workpiece (10) to be separated into an offcut (11) and a remaining workpiece (12) by electric discharge cutting by means of a wire electrode, with at least two holding means (1; 65) that are pressed against the workpiece in respectively opposed edge zones of the workpiece, wherein the holding means are designed as bridges that bridge the place of cut (2) being produced and comprise end portions (5, 6; 69, 70, 72, 73), whereof one (6) is intended to be secured to the offcut (11) being produced, and the other (5) to be secured to the remaining workpiece (12) being produced, and wherein the holding means can be positioned onto the two opposed edge zones of the workpiece (10) independently of each other, so as to allow the cut to be guided in various ways, and wherein the holding means have on their sides bearing on the workpiece (10) a recess (7) between the end portions (5, 6; 69, 70, 72, 73) so as to allow a gap to be left open for the wire electrode between the workpiece (10) and the respective holding means (1; 65).

2. Apparatus according to claim 1, characterized in that the end portions (5, 6; 69, 70, 72, 73) can be pressed against the workpiece (10) by means of a pressing on device (25; 26; 45; 68,71).

3. Apparatus according to claim 2, characterized in that a holding means (65) is subdivided into two halves (66, 67) intended to clamp the workpiece (10) at its opposed edge zones.

**Revendications**

1. Dispositif pour le maintien d'une pièce d'ouvrage (10) à diviser par un fil-électrode et par découpe par étincelage en une pièce séparée (11) et une pièce de base restante (12), comprenant au moins deux moyens de maintien (1; 65) qui, dans des zones de bord opposées respectives de la pièce d'ouvrage, sont poussés contre la pièce d'ouvrage, les moyens de maintien étant réalisés en tant que ponts, passant sur l'emplacement de coupe (2) se produisant entre la pièce séparée (11) et la pièce de base restante (12) et comportant des parties d'extrémité (5, 6 ; 69, 70, 72, 73) dont l'une (6) est destinée à être fixée sur la pièce qui sera séparée (11) et l'autre (5) à être fixée sur la pièce de base (12) qui reste en place, les moyens de maintien pouvant être positionnés indépendamment l'un de l'autre sur les deux zones de bords opposées de la pièce d'ouvrage (10) afin de permettre différents tracés de coupe, les moyens de maintien, sur leur côté en appui contre la pièce d'ouvrage (10) présentant entre leurs parties d'extrémité (5, 6 ; 69, 70, 72, 73) un évidement (7) pour constituer un espace intermédiaire pour le fil-électrode entre la pièce d'ouvrage (10) et le moyen de maintien (1; 65) concerné.

2. Dispositif suivant la revendication 1, caractérisé en ce que les parties d'extrémité (5, 6 ; 69, 70, 72, 73) peuvent être poussées par un dispositif d'appui (25, 26 ; 45, 68, 71) contre la pièce d'ouvrage (10).

3. Dispositif suivant la revendication 2, caractérisé en ce qu'un moyen de maintien (65) est divisé en deux moitiés (66, 67) destinées à serrer la pièce d'ouvrage (10) par ses zones de bord opposées.

Fig.4

Fig.3

Fig.2

Fig.1

Fig.5

Fig.6

Fig.7